(19) **Europäisches Patentamt**

**European Patent Office**

**Office européen des brevets**

(11) **EP 1 274 923 B1**

(12) **EUROPÄISCHE PATENTSCHRIFT**

(45) Veröffentlichungstag und Bekanntmachung des Hinweises auf die Patenterteilung:
**23.08.2006 Patentblatt 2006/34**

(51) Int Cl.:
*F01N 3/20* <sup>(2006.01)</sup>     *F01N 3/02* <sup>(2006.01)</sup>

(21) Anmeldenummer: **01936204.5**

(22) Anmeldetag: **06.04.2001**

(86) Internationale Anmeldenummer:
**PCT/EP2001/003987**

(87) Internationale Veröffentlichungsnummer:
**WO 2001/079666 (25.10.2001 Gazette 2001/43)**

(54) **ABGASANLAGE FÜR BRENNKRAFTMASCHINEN**

EXHAUST SYSTEM FOR INTERNAL COMBUSTION ENGINES

CIRCUIT D'ECHAPPEMENT POUR DES MOTEURS A COMBUSTION INTERNE

(84) Benannte Vertragsstaaten:
**DE ES FR GB IT**

(30) Priorität: **15.04.2000 DE 10018729**
**15.09.2000 DE 10045639**

(43) Veröffentlichungstag der Anmeldung:
**15.01.2003 Patentblatt 2003/03**

(73) Patentinhaber: **AUDI AG**
**85045 Ingolstadt (DE)**

(72) Erfinder:
• **ODENDALL, Bodo**
  **86633 Neuburg (DE)**
• **BAHL, Hans-Ulrich**
  **85139 Wettstetten (DE)**

(56) Entgegenhaltungen:
**EP-A- 0 839 995      DE-C- 19 742 762**
**US-A- 2 966 955      US-A- 3 605 389**
**US-A- 5 701 736**

## Beschreibung

Die Erfindung betrifft eine Abgasanlage für Brennkraftmaschinen, insbesondere in Kraftfahrzeugen, gemäß dem Oberbegriff des Patentanspruches 1.

Aus der gattungsbildenden DE 197 42 762 C1 ist eine Abgasanlage für Brennkraftmaschinen, insbesondere in Kraftfahrzeugen, mit einer Abgasreinigungsvorrichtung und einem Abgasweg zwischen Brennkraftmaschine und Abgasreinigungsvorrichtung angeordneten Temperatursteuereinrichtung mit einem Wärmetauscher bekannt sein, der als Strahlungskühler mit einem äußeren Gehäuse mit Ein- und Auslauftrichtern und mit zumindest einem innenliegenden, zum Gehäuse abstrahlenden Strahlungsblech gebildet ist. Konkret sind hier die als Kühlelemente bezeichneten Strahlungsbleche in einem äußeren Abgasführungsweg angeordnet und stehen zur Wärmeleitung über deren gesamte Länge in Kontakt mit der Außenwand des äußeren Abgasführungsweges. Zur Abführung der an die Außenwand abgegebenen Wärme sind auf deren Außenseite Kühlrippen vorgesehen. Auch aus der US 3,605,389 sind derartige Strahlungsbleche bekannt.

Demgegenüber ist es Aufgabe der vorliegenden Erfindung, eine Abgasanlage für Brennkraftmaschinen, insbesondere in Kraftfahrzeugen, mit einer einen Wärmetauscher aufweisenden Temperatursteuereinrichtung zu schaffen, mittels der eine noch bessere und effektivere Wärmeabfuhr aus dem Wärmetauscher ermöglicht wird.

Diese Aufgabe wird gelöst mit den Merkmalen des Patentanspruchs 1.

Gemäß dem Patentanspruch 1 ist das zumindest eine Strahlungsblech in dem Wärmetauscher nur über beabstandet voneinander angeordnete, im wesentlichen punktförmige Verbindungsstellen und im übrigen luftspaltisoliert im Gehäuse gehalten.

Mit einem derartigen erfindungsgemäßen Aufbau wird erreicht, dass hier die Wärmeabfuhr hauptsächlich durch Wärmestrahlung und nicht durch Wärmeleitung erfolgt, so dass über das innenliegende Strahlungsblech Wärmeenergie hauptsächlich in Form von elektromagnetischer Strahlung an das das Strahlungsblech umgebende Gehäuse abgegeben werden kann. Die abgestrahlte Wärmeleitung ist dabei proportional zur Oberfläche und zur vierten Potenz der Temperatur (Stefan-Boltzmann-Gesetz), was bedeutet, dass mit einem derartigen Strahlungskühler mit zunehmender Temperatur der Abgase in zunehmenden Maße Strahlungsenergie an das Gehäuse und von diesem zur Umgebung abgegeben wird. Daraus resultiert ein bei hohen Temperaturen stark zunehmender Kühleffekt.

Der weitere Vorteil einer solchen Konstruktion liegt darin, dass zunächst aufgrund der geringen Wärmekapazität des Wärmetauschers, der bevorzugt aus dünnwandigen Blechen hergestellt ist, der stromab liegende Katalysator oder Adsorber schnell auf seine light off-Temperatur von z. B. 250° C erhitzt wird, wobei der Wärmetauscher eine relativ geringe Kühlwirkung ausübt. Mit zunehmender Temperatur der Abgase und des Wärmetauschers werden die Strahlungsbleche stark erhitzt und geben in zunehmenden Maße Strahlungsenergie an das Gehäuse und von diesem zur Umgebung ab. Entsprechend der Formel zur Berechnung der abstrahlenden Wärmemenge geht die Temperatur dabei in der vierten Potenz in die Berechnung ein. Daraus resultiert ein bei hohen Temperaturen stark zunehmendes Kühleffekt, mit dem es gelingt, die stromab liegende Abgasreinigungsvorrichtung, z. B. einen DeNO$_x$-Katalysator oder einen Dreiwege-Katalysator, schnell auf die light off-Temperatur zu bringen und ggf. in einem gewünschten Temperaturbereich ohne Überhitzung zu halten.

In fertigungstechnisch und baulich günstiger Weise kann das Gehäuse des Wärmetauschers aus zumindest zwei Blechformteilen bzw. Halbschalen hergestellt sein, z. B. durch Tiefziehen. Das zumindest eine Strahlungsblech kann fertigungstechnisch einfach zwischen Verbindungsflanschen gehalten sein, die an die Gehäuse-Halbschalen angeformt sind.

Aus Festigkeitsgründen und zur Verminderung ggf. auftretender Geräuschabstrahlungen kann das Gehäuse in Form von nebeneinander angeordneten Rohren ausgebildet sein, die herstellungstechnisch günstig ebenfalls als Halbschalen gefertigt und miteinander verbunden werden können. Die Rohre können dabei entweder unmittelbar das äußere Gehäuse bilden, oder es kann zusätzlich noch ein glattflächiges, die Rohre umschließendes und im wesentlichen nicht in wärmeleitenden Kontakt mit den Rohren tretendes Gehäuse vorgesehen sein. Die letztere Ausführung hat bei der Verwendung in Kraftfahrzeugen den Vorteil eines niedrigen Luftwiderstandes bei laminarer Umströmung.

Bevorzugt kann die Temperatursteuereinrichtung für die Abgasbehandlungsvorrichtung bzw. den stromab liegenden Katalysator nur durch den Wärmetauscher bzw. dessen Selbstregelungseffekt gebildet sein. D. h., dass die vorbeschriebene steuerbare Klappe und eine entsprechende Bypassleitung entfallen können.

Mehrere Ausführungsbeispiele der Erfindung sind im folgenden mit weiteren Einzelheiten näher erläutert. Die schematische Zeichnung zeigt in

Fig. 1    teilweise eine Abgasanlage für eine Brennkraftmaschine in einem Kraftfahrzeuge, mit einem Wärmetauscher als Temperatursteuereinrichtung und einer nachgeschalteten Abgasreinigungsvorrichtung mit einem DeNO$_x$-Katalysator;

Fig. 2    eine Draufsicht auf den Wärmetauscher nach Fig. 1;

Fig. 3    einen Querschnitt entlang der Linie III-III der Fig. 2 durch den Wärmetauscher;

Fig. 4    eine Grafik des Wärmetauschers nach den Fig. 1 bis 3 mit Darstellung des Wärmeflusses über der Abgastemperatur; aufgeteilt in die konvektiven Anteile und die Strahlungsanteile;

Fig. 5    eine Draufsicht auf einen modifizierten Wärmetauscher, dessen äußeres Gehäuse durch mehrere, aneinander gereihte Rohre gebildet ist;

Fig. 6    einen Querschnitt entlang der Linie VI-VI der Fig. 5;

Fig. 7 bis 10    Ausführungen der Verbindungsbereiche zwischen den gehäuseseitigen Halbschalen und dem Strahlungsblech in jeweils vergrößertem Maßstab;

Fig. 11    ein an der Unterseite des Wärmetauschers zu befestigendes Abschirmblech; und

Fig. 12    einen Schnitt XII-XII durch das Abschirmblech gemäß Fig. 11.

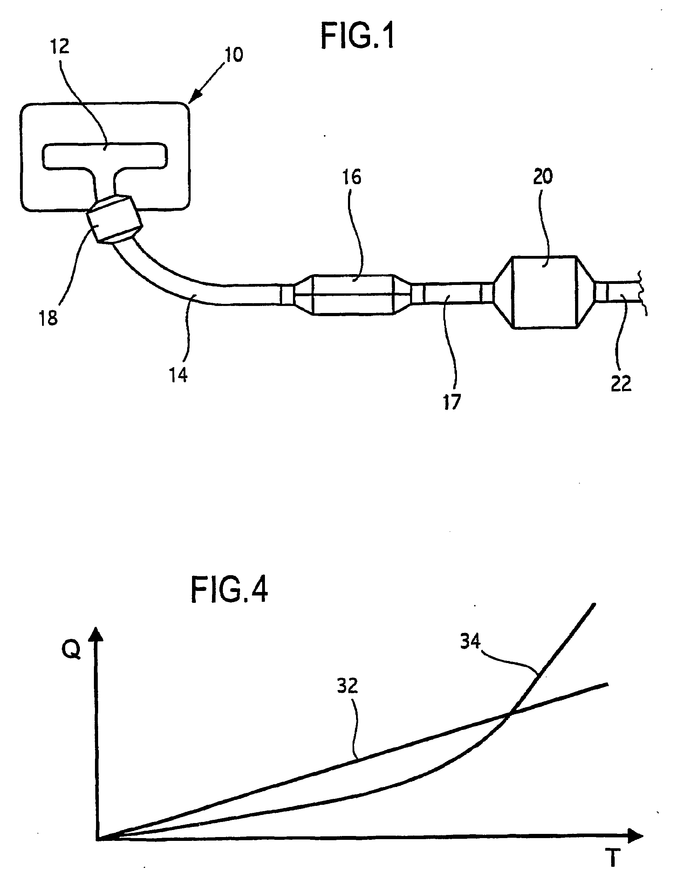

Die Fig. 1 zeigt schematisch eine Brennkraftmaschine 10 für ein Kraftfahrzeug mit einer Abgasanlage mit einem Abgaskrümmer 12, einem Abgasvorrohr 14, mit einem dazwischen geschalteten Dreiwege-Vorkatalysator 18, einem Wärmetauscher 16 als Temperatursteuereinrichtung und eine über eine Leitung 17 nachgeschaltete Abgasreinigungsvorrichtung mit einem DeNO$_x$-Adsorber 20. An den Adsorber 20 ist über eine Leitung 22 die weitere Abgasanlage z. B. mit einem Hauptschalldämpfer und einem Abgasendrohr angeschlossen.

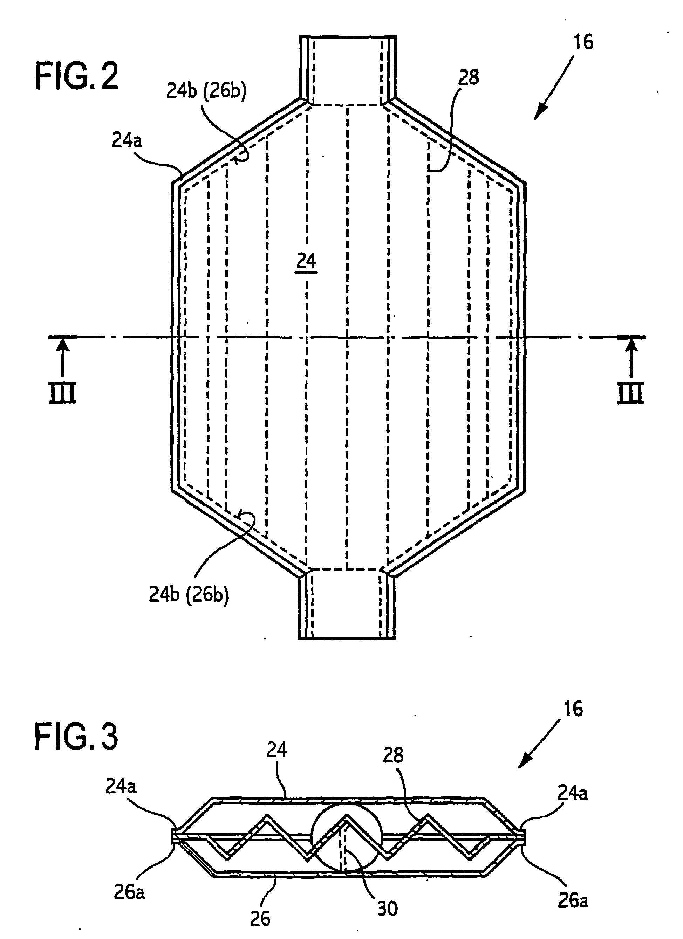

Der Wärmetauscher 16 (vgl. Fig. 2 und 3) weist ein Gehäuse 24,26 zur Abgasführung auf, das sich aus zwei aus einem Stahlblech tiefgezogenen Halbschalen 24,26 zusammensetzt. Die Halbschalen 24,26 sind mit umlaufenden Verbindungsflanschen 24a,26a versehen, zwischen denen ein das Gehäuse 24,26 in Abgasströmungsrichtung unterteilendes Strahlungsblech 28 z. B. durch elektrisches Widerstandschweißen (Rollnahtschweißen) gehalten ist.

An den Halbschalen 24,26 sind jeweils hälftig Einlauf- bzw. Auslauftrichter 24b,26b ausgebildet, über die der Wärmetauscher 16 an die anschließenden Abgasleitungen 14,17 angeschlossen ist.

Das Gehäuse 24,26 des Wärmetauschers 16 ist im Querschnitt gesehen im wesentlichen rechteckförmig und glattflächig gestaltet (Fig. 3). Ferner ist das ebenfalls aus Stahlblech hergestellte Strahlungsblech 28 zur Vergrößerung dessen Strahlungsfläche quer zur Abgasströmungsrichtung zickzackförmig ausgebildet. Am Strahlungsblech 28 könnte ggf. etwa zentral gelegen ein Stützblech 30 zur Vermeidung von Schwingungen vorgesehen sein. Abgesehen von den Schweißverbindungen und ggf. dem Stützblech 30 ist das Strahlungsblech 28 gegenüber dem Gehäuse 24,26 wie ohne weiteres ersichtlich luftspaltisoliert.

Der beschriebene Wärmetauscher 16 weist aufgrund der relativ dünnwandigen Stahlbleche eine geringe Wärmekapazität auf; d. h., dass das heiße Abgas zunächst wenig abgekühlt wird und somit eine schnelle Aufheizung der stromab liegenden Abgasreinigungsvorrichtung 20 ermöglicht.

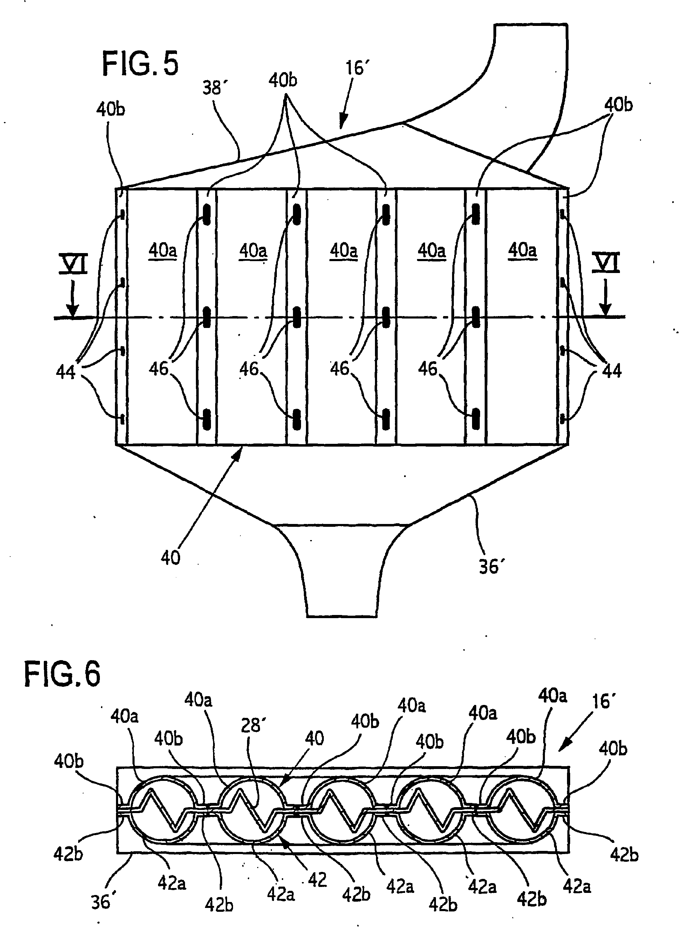

Dazu zeigt die Grafik in Fig. 4 den Wärmeabfluss Q des Wärmetauschers 16 über der Abgastemperatur T. Es ist ersichtlich, dass neben der etwa linear ansteigenden Konvektionskühlung (Linie 32) die Strahlungskühlung (Kurve 34) zunächst gering ist. Dies begünstig die schnelle Aufheizung der Abgasreinigungsvorrichtung 20.

Mit zunehmender Abgastemperatur T und Betriebsdauer der Brennkraftmaschine wird das Strahlungsblech 28 und das Gehäuse 24,26 des Wärmetauschers 16 weiter erhitzt, wobei die Strahlungskühlung überproportional ansteigt. Dies ergibt sich schon aus der gängigen Gleichung

$$Q = \varepsilon \times \sigma \times A \times T^4.$$

Ohne auf die Gleichung näher einzugehen ist daraus ableitbar, dass die Temperatur T in der vierten Potenz eingeht. Dabei wird das Strahlungsblech 28 mit zunehmendem Strahlungsanteil thermisch an die Halbschalen 24,26 angekoppelt, wodurch insgesamt die für den konvektiven Wärmeabgang des Abgasstromes zur Verfügung stehende Fläche des Wärmetauschers 16 erhöht wird.

Diese zunehmende Abgaskühlung bewirkt einen Selbstregeleffekt der Abgastemperatur mit geringer Wärmeabgabe beim Kaltstart der Brennkraftmaschine und einer hoher Kühlleistung bei hohen Abgastemperaturen, so dass ggf. eine Bypassleitung und eine diese steuernde Absperrklappe entfallen können und der Wärmetauscher 16 allein als Temperatursteuereinrichtung dient.

Der modifizierte Wärmetauscher 16' gemäß den Fig. 5 und 6 weist ein ebenfalls aus Stahlblech geformtes, mehrteiliges Gehäuse auf, dass sich aus dem Einlauftrichter 36', dem Auslauftrichter 38' und zwei dazwischen befindlichen Halbschalen 40,42 zusammensetzt.

Die Halbschalen 40,42 sind durch mehrere halbkreisförmige Rohrabschnitte 40a bzw. 42a gebildet, die parallel nebeneinander angeordnet und durch Verbindungsflansche 40b bzw. 42b je Halbschale 40 bzw. 42 zu einer Baueinheit geformt sind.

Die Halbschalen 40,42 bzw. deren außen liegende Verbindungsflansche 40b,42b sind z. B. durch Rollnahtschweißen gasdicht miteinander verbunden; des gleichen sind der Einlauftrichter 36' und der Auslauftrichter 38' gasdicht mit den Stirnseiten der Halbschalen 40,42 verschweißt, so dass ein gasdichtes Gehäuse mit im Ausführungsbeispiel 5 gasführenden Rohren 40a,42a im Bereich zwischen dem Einlauftrichter 36' und dem Auslauftrichter 38' geschaffen ist.

Zwischen den Halbschalen 40,42 ist ein Strahlungsblech 28' angeordnet, das im Querschnitt gesehen (vgl. Fig. 6) jeweils im Bereich der Verbindungsflansche 40b,42b flach und im Bereich der Rohre 40a,42a zickzackförmig geformt ist, um eine wirkungsvolle Abstrahlung von Wärmeenergie an die Rohre 40a,42a gegeben ist.

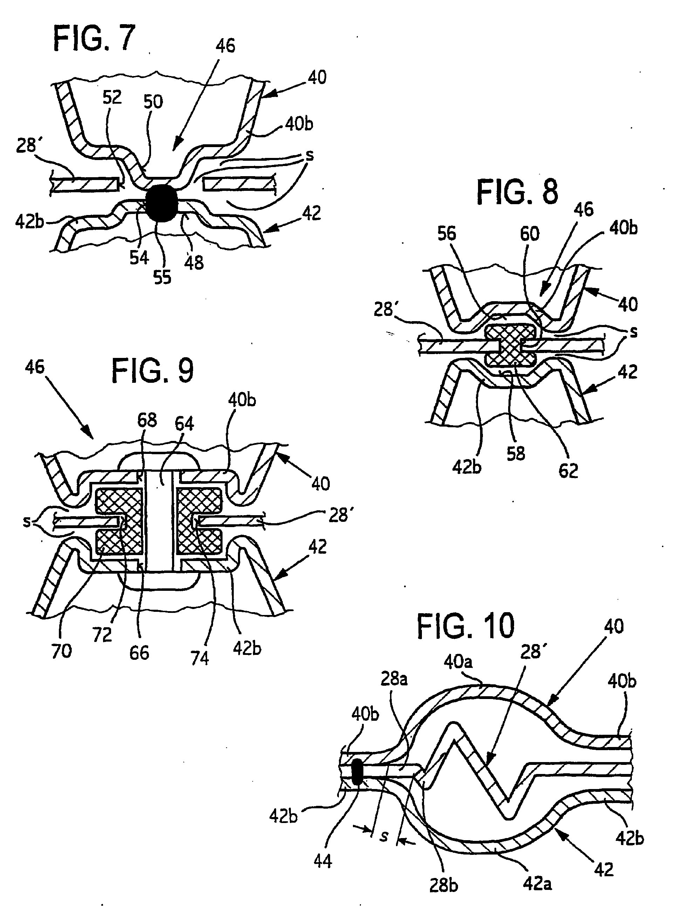

Das Strahlungsblech 28' ist in den äußeren Verbindungsbereichen nur an örtlichen Verbindungsstellen 44 (vgl. Fig. 5 und Fig. 10) mit den Verbindungsflanschen 40b,42b über entsprechend angeformte Laschen 28a verschweißt. In den übrigen Randbereichen ist es zur Bildung eines Luftspaltes s zurückgesetzt und mit einer Abkantung 28b versehen, die dessen Eigensteifigkeit in Gasströmungsrichtung erhöht.

Ferner ist das Strahlungsblech 28' an mehreren Verbindungsstellen 46 mit den innen liegenden Verbindungsflanschen 40b,42b der Halbschalen 40,42 wärmeisolierend verbunden.

Gemäß Fig. 7 sind die örtlichen Verbindungsstellen 46 dadurch gebildet, dass in die Verbindungsflansche 40b,42b kreis- oder langlochförmige Vorsprünge 48,50 eingeprägt sind, die entsprechende Ausnehmungen 52 im Strahlungsblech 28' durchgreifen und fest miteinander verbunden sind, z. B. durch Schweißen oder Löten. Dazu ist der eine Vorsprung 48 mit einer Bohrung 54 versehen, durch die hindurch die Verschweißung oder Lötung ausgeführt werden kann. Die Ausnehmungen 52 im Strahlungsblech 28' sind so groß, dass zwischen den Ausnehmungen 52 und den Vorsprüngen 48,50 Luftspalte s verbleiben. Gleiches gilt zwischen den Verbindungsflanschen 40b,42b und dem Strahlungsblech 28'.

In der Fig. 8 sind die Verbindungsstellen 46 gestaltet, in dem in die Verbindungsflansche 40b,42b Vertiefungen 56,58 einformt sind, in denen aus einem Drahtgeflecht oder einem Metallflies geformte, pilzförmige Puffer 62 geführt sind. Die Puffer 62 sind dabei in Ausnehmungen 60 des Strahlungsbleches 28' eingesetzt. In den übrigen Bereichen ist das Strahlungsblech 28' wiederum über Luftspalte s gegenüber den Verbindungsflanschen 40b,42b luftspaltisoliert. Das Strahlungsblech 28' ist somit über die Verbindungsstellen 46 schwingungs- und wärmeisoliert gehalten.

In der Fig. 9 schließlich sind die Verbindungsstellen 46 mit Niete 64 gebildet, welche Niete entsprechende Bohrungen 66,68 in den Verbindungsflanschen 40b,42b durchgreifen. Zwischen den Verbindungsflanschen 40b und 42b sind ebenfalls aus einem Drahtgewirk bestehende Abstandshalter 70 eingespannt, die über eine ringförmige Nut 72 in korrespondierenden Ausnehmungen 74 des Strahlungsbleches 28' gehalten sind. Die Ausnehmungen 72 sind dabei so groß gewählt, dass eine Relativbewegung zwischen den Abstandshaltern 70 und dem Strahlungsblech 28' z. B. zum Ausgleich von Wärmespannungen gegeben ist. Zwischen den Verbindungsflanschen 40b und 42b und dem Strahlungsblech 28' sind wiederum Luftspalte s gebildet.

Die in den Fig. 7 bis 10 dargestellten und beschriebenen Verbindungsstellen 44,46 können alternativ oder auch in Kombination angewendet sein. Ggf. kann der Wärmetauscher 16' gemäß den Fig. 5 und 6 auch noch im Bereich der Rohrführungen 42,44 mit einem glattflächigen, äußeren Mantel als weiteres Gehäuseteil ausgeführt sein.

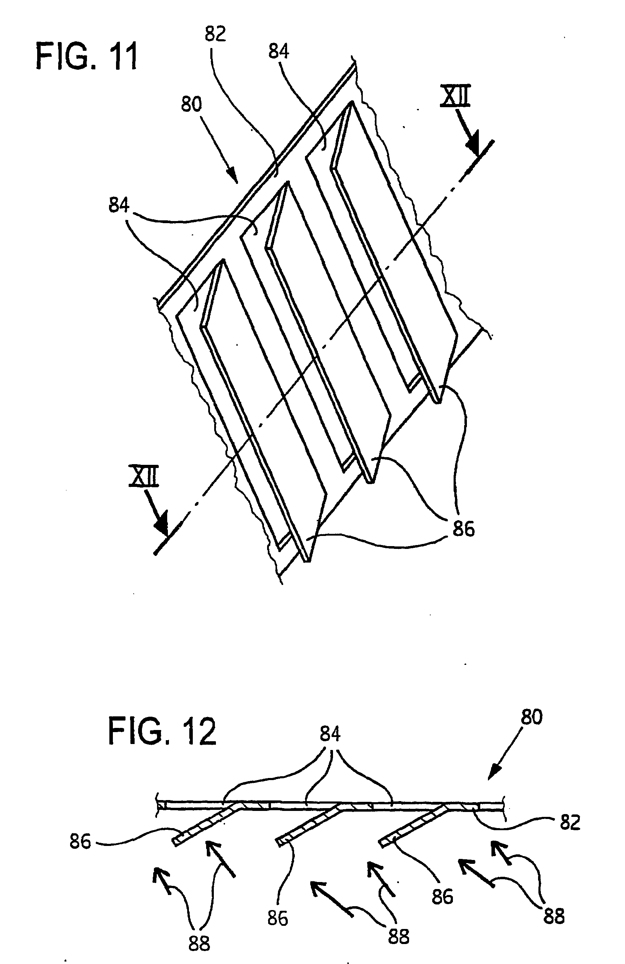

Ferner kann an der Unterseite des Wärmetauschers 16 oder 16' (vgl. Fig. 11 und 12) ein Abschirmblech 80 gegen Wasserschlag angeordnet sein. Dieses besteht aus einer Grundplatte 82 mit Öffnungen 84, aus denen z. B. durch Stanzen Lamellen 86 herausgeformt sind. Die Lamellen 86 sind in Fahrtrichtung des Kraftfahrzeuges gesehen schräg nach hinten verlaufend ausgerichtet, so dass sie insbesondere Spritzwasser (vgl. Pfeile 88) abweisen, die Abstrahlung der Wärmeenergie des Wärmetauschers 16 aber nicht behindern.

Das Abschirmblech 80 kann an seinen Randbereichen und/oder über die beschriebenen Verbindungsstellen 44,46 mit dem Wärmetauscher verbunden sein.

Der beschriebene Wärmetauscher 16 ist zudem baulich und fertigungstechnisch einfach, robust im Betrieb und unempfindlich gegen Verschmutzungen im Abgassystem. Es versteht sich, dass insbesondere für das Strahlungsblech 28, aber auch für das umgebende Gehäuse Bleche zu verwenden sind, die gute Emissionswerte $\varepsilon$ ergeben.

Das Strahlungsblech 28 oder ggf. mehrere Strahlungsbleche könne zudem wie ein Dreiwegekatalysator oder bevorzugt wie der DeNO$_x$ Adsorber 20 katalytisch wirksam beschichtet sein. Dadurch kann die NO$_x$ Speicherwirkung des Adsorbers 20 zusätzlich erhöht werden; ferner kann beispielsweise die Entschwefelung des Adsorbers 20 bei relativ hohen Temperaturen (z. B. 700 °C) verbessert werden, indem die chemische Exotherme bei den eingeleiteten Maßnahmen (Sekundärluftzuführung) zum Teil bereits im Wärmetauscher 16 umgesetzt wird (geringere Überhitzungsgefahr).

**Patentansprüche**

1. Abgasanlage für Brennkraftmaschinen, insbesondere in Kraftfahrzeugen, mit einer Abgasreinigungsvorrichtung und einer im Abgasweg zwischen Brennkraftmaschine und Abgasreinigungsvorrichtung angeordneten Temperatursteuereinrichtung mit einem als Strahlungskühler ausgebildeten Wärmetauscher (16'), der mit einem äußeren Gehäuse (40, 42) mit Ein- und Auslauftrichtern (36', 38') und mit zumindest einem innenliegenden, zum Gehäuse abstrahlenden Strahlungsblech (28') gebildet ist, **dadurch gekennzeichnet,**

**dass** das zumindest eine Strahlungsblech (28') in dem Wärmetauscher (16') nur über beabstandet voneinander angeordnete, im wesentlichen punktförmige Verbindungsstellen (44, 46) und im übrigen luftspaltisoliert im Gehäuse (40, 42) gehalten ist.

2. Abgasanlage nach Anspruch 1, **dadurch gekennzeichnet, dass** das Gehäuse durch zwei miteinander gasdicht verbundene Halbschalen (40, 42) gebildet ist, zwischen denen das zumindest eine Strahlungsblech (28') angeordnet ist.

3. Abgasanlage nach Anspruch 1 oder 2, **dadurch gekennzeichnet, dass** innerhalb des Gehäuses Rohre (40, 42) als Gasführungen vorgesehen sind und dass innerhalb der Rohre (40, 42) Strahlungsbleche (28') angeordnet sind.

4. Abgasanlage nach einem der Ansprüche 1 bis 3, **dadurch gekennzeichnet, dass** das Gehäuse durch mehrere aneinander gereihte Rohre (40, 42) gebildet ist.

5. Abgasanlage nach Anspruch 4, **dadurch gekennzeichnet, dass** die Rohre mit dazwischen liegenden Verbindungsflanschen (40b, 42b) als Halbschalen (40, 42) ausgebildet sind.

6. Abgasanlage nach Anspruch 5, **dadurch gekennzeichnet, dass** das Strahlungsblech (28') im wesentlichen luftspaltisoliert zwischen den Halbschalen (40, 42) angeordnet ist.

7. Abgasanlage nach einem der vorhergehenden Ansprüche, **dadurch gekennzeichnet, dass** das zumindest eine Strahlungsblech (28') eine deren Strahlungsfläche vergrößernde Konfiguration aufweist.

8. Abgasanlage nach Anspruch 7, **dadurch gekennzeichnet, dass** das zumindest eine Strahlungsblech (28') quer zur Abgasströmungsrichtung wellenförmig oder zickzackförmig geformt ist.

9. Abgasanlage nach einem der vorhergehenden Ansprüche, **dadurch gekennzeichnet, dass** das zumindest eine Strahlungsblech (28') zwischen Verbindungsflanschen und Randflanschen des Gehäuses (40, 42) gehalten ist.

10. Abgasanlage nach Anspruch 9, **dadurch gekennzeichnet, dass** die Verbindungen (46) des zumindest einen Strahlungsbleches (28') mit dem Gehäuse (16') zumindest teilweise als Schiebeführungen wirken.

11. Abgasanlage nach Anspruch 10, **dadurch gekennzeichnet, dass** die Schiebeführungen durch an den Verbindungsstellen (46) angeordnete Puffer (60) und oder Abstandshalter (70) gebildet sind, die in korrespondierenden Vertiefungen (56, 58) der Verbindungsflansche (40b, 42b) geführt sind und die Ausnehmungen (60, 74) des Strahlungsbleches (28') durchgreifen.

12. Abgasanlage nach Anspruch 10, **dadurch gekennzeichnet, dass** die Schiebeführungen durch langlochförmige Ausnehmungen (52) in dem Strahlungsblech (28') gebildet sind, durch die hindurch gehäusefeste Vorsprünge (48, 50) fest miteinander verbunden sind.

13. Abgasanlage nach einem der vorhergehenden Ansprüche, **dadurch gekennzeichnet, dass** das zumindest eine Strahlungsblech (28') und/oder die Innenfläche des Gehäuses (36', 38', 40, 42) katalytisch wirksam beschichtet ist.

14. Abgasanlage nach einem der vorhergehenden Ansprüche, **dadurch gekennzeichnet, dass** zumindest an der Unterseite des Wärmetauschers (16') ein Abschirmblech (80) mit strahlungsdurchgängigen Öffnungen (84) angeordnet ist.

15. Abgasanlage nach Anspruch 14, **dadurch gekennzeichnet, dass** das Strahlungsblech (80) mit nach unten abragenden, Spritzwasser abweisenden Lamellen (86) versehen ist.

16. Abgasanlage nach Anspruch 14 oder 15, **dadurch gekennzeichnet, dass** die Lamellen (86) aus den Öffnungen (84) herausgeformt und mit Bezug zur Fahrtrichtung des Kraftfahrzeuges schräg nach hinten verlaufend ausgerichtet sind.

**Claims**

1. Exhaust system for internal combustion engines, particularly in motor vehicles, with an exhaust gas purification apparatus and a temperature control device arranged in the exhaust path between internal combustion engine and exhaust gas purification apparatus with a heat exchanger (16') which is configured as a radiation cooler and is formed with an outer casing (40, 42) with inlet and outlet funnels (36', 38') and with at least one internal radiation plate (28') radiating to the casing,
**characterized in that**
the at least one radiation plate (28') is held in the heat exchanger (16') only by spaced-apart spot connections (44, 46), and, as for the rest, is air gap insulated within the casing (40, 42).

2. Exhaust system according to Claim 1, **characterized in that** the casing is formed by two half-shells (40, 42), joined to each other with a gastight connection, between which the at least one radiation plate (28') is arranged.

3. Exhaust system according to Claim 1 or Claim 2, **characterized in that** tubes (40, 42) are provided inside the casing as gas ducts, and **in that** radiation plates (28') are arranged inside the tubes (40, 42).

4. Exhaust system according to any one of Claims 1 to 3, **characterized in that** the casing is formed by a plurality of lined-up tubes (40, 42).

5. Exhaust system according to Claim 4, **characterized in that** the tubes are configured as half-shells (40, 42) with connecting flanges (40b, 42b) between the tubes.

6. Exhaust system according to Claim 5, **characterized in that** the radiation plate (28') is arranged so as to be substantially air gap insulated between the half-shells (40, 42).

7. Exhaust system according to any one of the preceding claims, **characterized in that** the at least one radiation plate (28') has a configuration increasing its radiating surface area.

8. Exhaust system according to Claim 7, **characterized in that** the at least one radiation plate (28') is corrugated or zigzag-shaped transversely to the direction of exhaust gas flow.

9. Exhaust system according to any one of the preceding claims, **characterized in that** the at least one radiation plate (28') is held between connecting flanges and edge flanges of the casing (40, 42).

10. Exhaust system according to Claim 9, **characterized in that** the connections (46) of the at least one radiation plate (28') to the casing (16') act at least to some extent as sliding guides.

11. Exhaust system according to Claim 10, **characterized in that** the sliding guides are formed by buffers (60) and or spacers (70) arranged at the connections (46), which are guided in corresponding indentations (56, 58) in the connecting flanges (40b, 42b) and pass through openings (60, 74) in the radiation plate (28').

12. Exhaust system according to Claim 10, **characterized in that** the sliding guides are formed by slot-shaped openings (52) in the radiation plate (28') through which projections (48, 50) integral with the casing are fixedly joined to each other.

13. Exhaust system according to any one of the preceding claims, **characterized in that** the at least one radiation plate (28') and/or the internal surface of the casing (36', 38', 40, 42) is (or are) provided with a catalytically active coating.

14. Exhaust system according to any one of the preceding claims, **characterized in that** a splash guard (80) with radiation openings (84) is arranged at least on the underside of the heat exchanger (16').

15. Exhaust system according to Claim 14, **characterized in that** the splash guard (80) is provided with downwards-jutting splash-deflecting vanes (86).

16. Exhaust system according to Claim 14 or Claim 15, **characterized in that** the vanes (86) are formed by being bent out of the openings (84) and are angled rearwards with respect to the direction of travel of the motor vehicle.

**Revendications**

1. Installation d'échappement pour des moteurs à combustion interne, en particulier dans des véhicules automobiles, avec un dispositif d'épuration des gaz d'échappement et un dispositif de commande de la température, disposé dans le parcours des gaz d'échappement entre le moteur à combustion interne et le dispositif d'épuration des gaz d'échappement, avec un échangeur de chaleur (16') réalisé sous forme d'un refroidisseur par rayonnement, qui est formé avec un carter extérieur (40, 42) avec des trémies d'entrée et de sortie (36', 38') et avec au moins une tôle de rayonnement (28') située à l'intérieur et rayonnant vers le carter,
**caractérisé en ce que** la au moins une tôle de rayonnement (28') dans l'échangeur de chaleur (16') est maintenue dans le carter (40, 42) uniquement par l'intermédiaire de points de raccordement (44, 46), disposés à distance les uns des autres, et isolée au demeurant par une couche d'air.

2. Système d'échappement selon la revendication 1, **caractérisé en ce que** le carter est formé par deux demi-coquilles (40, 42) reliées l'une à l'autre en étant étanches au gaz, entre lesquelles au moins une tôle de rayonnement (28') est disposée.

3. Système d'échappement selon la revendication 1 ou 2, **caractérisé en ce que** des tubes (40, 42) sont prévus à l'intérieur du carter en tant que conduites de gaz et des tôles de rayonnement (28') sont disposées à l'intérieur des tubes (40, 42).

4. Système d'échappement selon l'une des revendications 1 à 3, **caractérisé en ce que** le carter est formé par plusieurs tubes (40, 42) montés en série les uns contre les autres.

**5.** Système d'échappement selon la revendication 4, **caractérisé en ce que** les tubes sont réalisés sous forme de demi-coquilles (40, 42) avec des brides de liaison intermédiaires (40b, 42b).

**6.** Système d'échappement selon la revendication 5, **caractérisé en ce que** la tôle de rayonnement (28') est disposée entre les demi-coquilles (40, 42) sensiblement isolée par une couche d'air.

**7.** Système d'échappement selon l'une des revendications précédentes, **caractérisé en ce que** la au moins une tôle de rayonnement (28') présente une configuration augmentant sa surface de rayonnement.

**8.** Système d'échappement selon la revendication 7, **caractérisé en ce que** au moins une tôle de rayonnement (28') est formée, transversalement au sens d'écoulement des gaz d'échappement sous forme ondulée ou en zigzag.

**9.** Système d'échappement selon l'une des revendications précédentes, **caractérisé en ce que** la au moins une tôle de rayonnement (28') est maintenue entre les brides de liaison et les brides latérales du carter (40, 42).

**10.** Système d'échappement selon la revendication 9, **caractérisé en ce que** les raccordements (46) de la au moins une tôle de rayonnement (28') agissent avec le carter (16'), au moins partiellement, comme guidages coulissants.

**11.** Système d'échappement selon la revendication 10, **caractérisé en ce que** les guidages coulissants sont formés par des tampons (60) et/ou des écarteurs (70) disposés sur les points de raccordement (46), qui sont guidés dans des évidements (56, 58) correspondants des brides de liaison (40b, 42b) et qui traversent les creux (60, 74) de la tôle de rayonnement (28').

**12.** Système d'échappement selon la revendication 10, **caractérisé en ce que** les guidages coulissants sont formés par des évidements (52) en forme de trous longitudinaux dans la tôle de rayonnement (28'), grâce auxquels des parties en saillie (48, 50) solidaires du carter sont reliées les unes aux autres.

**13.** Système d'échappement selon l'une des revendications précédentes, **caractérisé en ce que** la au moins une tôle de rayonnement (28') et / ou la surface interne du carter (36', 38', 40, 42) ont un revêtement catalytique actif.

**14.** Système d'échappement selon l'une des revendications précédentes, **caractérisé en ce qu'**une tôle de protection (80), avec des ouvertures laissant passer les rayons (84), est disposée au moins sur la face inférieure de l'échangeur de chaleur (16').

**15.** Système d'échappement selon la revendication 14, **caractérisé en ce que** la tôle de rayonnement (80) est équipée de lamelles (86) faisant saillie vers le bas et chassant l'eau projetée.

**16.** Système d'échappement selon la revendication 14 ou 15, **caractérisé en ce que** les lamelles (86) sont formées à partir des ouvertures (84) et sont orientées s'étendant inclinées vers le bas par rapport à la direction de circulation du véhicule automobile.

# FIG.1

# FIG.4

FIG.2

24b (26b)

24a

24

28

16

III

III

24b (26b)

FIG.3

24a

24

26a

26

28

30

16

24a

26a

EP 1 274 923 B1

FIG.5

FIG.6

10

# FIG. 7

# FIG. 8

# FIG. 9

# FIG. 10

FIG. 11

FIG. 12